# EUROPEAN PATENT APPLICATION

(11) **EP 1 667 262 A1**
(43) Date of publication of application: **07.06.2006**
(21) Application number: 03818649.0
(22) Date of filing: 10.09.2003
(51) Int. Cl.: H01M 8/02

(54) **FUEL CELL SEPARATOR**

(71) Applicant: MITSUBISHI PLASTICS INC., Tokyo 100-0005 (JP)
(72) Inventor: MIYAGAWA, M. Nagahama Kojo, Mitsubishi Plastics, Nagahama-shi, Shiga 526-8660 (JP)
(74) Representative: Hering, Hartmut
(86) International application number: PCT/JP2003/011577
(87) International publication number: WO 2005/027248

(57) **Abstract**

A fuel cell separator comprises a resin conductive layer as a mixture of a resin and a conductive filler at least on one side of a metal substrate, wherein the resin conductive layer comprises (a) a first resin layer having a volume resistance of 1.0 Ω·cm or less and (b) at least one of a second resin layer constituting the surface of the resin conductive layer and having a volume resistance smaller than that of the first resin layer and a third resin layer formed in an interface with the metal substrate and having a volume resistance smaller than that of the first resin layer. The separator is excellent in current collecting performance, formability, strength and corrosion resistance as a fuel cell separator, especially as a separator for a solid polymer electrolyte fuel cell.

## Description

### Technical Field

The present invention relates to a fuel cell separator; particularly to a separator that is used in a fuel cell having a plurality of laminated electric cells, and is disposed between adjacent electric cells (i.e. unit cells) and that forms a fuel gas and an oxidation gas channels in combination with electrodes while separating a fuel gas and an oxidation gas; especially to a fuel cell separator which exhibits excellent formability, strength and corrosion resistance.

### Background Art

A separator constituting a fuel cell, particularly a polymer electrolyte fuel cell, is disposed in contact with each of electrodes by which a solid electrolyte film is sandwiched on both sides. In order to form channels for feeding gases such as a fuel gas and an oxidizer gas between the separator and the electrode, there are formed a number of protrusions and trenches for forming gas channels in the separator surface facing the electrodes.

An electric cell (i.e. unit cell) of a fuel cell has an electromotive force as low as 1 V or less, and thus, a plurality of electric cells are laminated via a separator. Thus, the separator contacts with an electrode and functions to draw a current conductor therefrom. It is, therefore, required to have excellent current collecting performance.

Conventionally, a separator for a fuel cell is generally formed from a material which exhibit excellent strength and conductivity, for example, a dense carbon graphite or a metal material such as stainless steel (SUS), titanium and aluminum.

A separator made of dense carbon graphite exhibits high electric conductivity and maintains high current collecting performance even after long-term use, but it is, however, a very fragile material. It is, therefore, not easy to mechanically process it by, for example, cutting, for forming a number of protrusions and/or trenches on the surface of the separator, leading to difficulty in mass production.

On the other hand, a separator made of the above metal material has higher strength and ductility than a dense carbon graphite, and thus is advantageous that a number of protrusions and/or trenches for forming gas channels can be formed by press-working and can be readily mass-produced. However, even a polymer electrolyte fuel cell operating at a relatively low temperature is exposed to almost saturated steam at a temperature of 70 to 90 °C. Thus, in a separator containing a metal material, an oxide layer tends to be formed on its surface due to corrosion, resulting in increase in a contact resistance with an electrode via the oxide layer formed thereon, which causes deterioration in current collecting performance of the separator.

There has been investigated a material prepared by coating the surface of a highly processable metal material, as a constituent material for a separator, with a noble metal material such as gold having corrosion resistance. Such a material cannot be, however, commonly used because it is very expensive.

To solve these problems, we have disclosed a separator having a resin layer containing a conductive filler on the surface of a metal substrate (Japanese Patent Laid-Open Publication No. 2002-15750). This separator exhibits high electric conductivity and excellent current collecting performance as well as excellent formability, strength and corrosion resistance.

The present invention has been achieved for further improving performance. Specifically, an objective of this invention is to provide a fuel cell separator meeting the requirements for both current collecting performance and formability, strength and corrosion resistance, particularly a separator for a polymer electrolyte type fuel cell.

### Disclosure of the Invention

The present invention relates to the following aspects.
1. A fuel cell separator comprising a resin conductive layer (i.e. resin-composition electro-conductive layer) as a mixture of a resin and a conductive filler at least on one side of a metal substrate, wherein
   the resin conductive layer comprises
   (a) a first resin layer having a volume resistance of 1.0 Ω·cm or less, and
   (b) at least one of a second resin layer constituting the surface of the resin conductive layer and having a volume resistance smaller than that of the first resin layer and a third resin layer formed in an interface with the metal substrate and having a volume resistance smaller than that of the first resin layer.
2. The fuel cell separator as described in above item 1, wherein each of the second resin layer and the third resin layer has a larger volume content of the conductive filler in the respective resin layer than that of the conductive filler in the first resin layer.
3. The fuel cell separator as described in above item 1 or 2, wherein each of the second resin layer and the third resin layer has a volume resistance of 0.5 Ω·cm or less.
4. The fuel cell separator as described in any of above items 1 to 3, wherein the first resin layer contains the conductive filler in 5 to 40 % by volume and each of the second and the third resin layers contains the conductive filler in 20 to 90 % by volume.
5. The fuel cell separator as described in above item 4, wherein the first resin layer contains the conductive filler in 8 to 15 % by volume.
6. The fuel cell separator as described in any of above items 1 to 5, wherein the metal substrate is made of a material selected from the group consisting of stainless steel, titanium, aluminum, copper, nickel and steel.
7. The fuel cell separator as described in above item 6, wherein the metal substrate has, in its surface, a plated layer made of at least one metal selected from the group consisting of nickel, tin, copper, titanium, gold, platinum, silver and palladium.
8. The fuel cell separator as described in above item 6, wherein the metal substrate has a roughened surface.
9. The fuel cell separator as described in any of above items 1 to 8, wherein the conductive filler is selected from the group consisting of carbon materials, metal carbides, metal oxides, metal nitrides and metals.
10. The fuel cell separator as described in above item 9, wherein the conductive filler is selected from the group consisting of carbon black and a fine carbon fiber.
11. The fuel cell separator as described in any of above items 1 to 8, wherein the conductive filler contained in each of the second resin layer and the third resin layer comprises the fine carbon fiber.
12. The fuel cell separator as described in above item 11, wherein the fine carbon fiber has a fiber diameter of 0.001 to 0.5 µm and a fiber length of 1 to 100 µm.
13. The fuel cell separator as described in above item 9, wherein the conductive filler contained in the first resin layer comprises carbon black.
14. The fuel cell separator as described in any of above items 1 to 13, wherein the resin is selected from the group consisting of fluororesins, fluororubbers, polyolefin resins and polyolefin elastomers.
15. The fuel cell separator as described in any of above items 1 to 14, wherein the first resin layer has a thickness of 5 to 300 µm, and each of the second and the third resin layers has a thickness of 0.1 to 20 µm.
16. The fuel cell separator as described in any of above items 1 to 15, wherein the resin conductive layer has the first and the second resin layers.
17. The fuel cell separator as described in any of above items 1 to 15, wherein the resin conductive layer has the first and the third resin layers.
18. The fuel cell separator as described in any of above items 1 to 15, wherein the resin conductive layer has the first, the second and the third resin layers.
19. A process for manufacturing the fuel cell separator as described in any of above items 1 to 18, comprising steps of:
   laminating a resin conductive layer as a mixture of a resin and a conductive filler on at least one side of a metal substrate; and
   forming a protrusion and a trench to be a gas channel, by pressing the substrate having the laminated resin conductive layer.
20. The process for manufacturing a fuel cell separator as described in above item 19, further comprising a step of thermal annealing after the forming the protrusion and the trench by pressing.
21. A process for manufacturing a fuel cell separator as described in any of above items 1 to 18, comprising steps of:
   laminating a resin conductive layer as a mixture of a resin and a conductive filler on at least one side of a metal substrate;
   covering the uppermost surface of the metal substrate having the laminated resin conductive layer with a protective film;
   forming a protrusion and a trench to be a gas channel by pressing the substrate covered by the protective film; and
   peeling the protective film from the substrate having the protrusion and the trench.
22. The process for manufacturing a fuel cell separator as described in above item 21, further comprising a step of thermal annealing after forming the protrusion and the trench by pressing.
23. The process for manufacturing a fuel cell separator as described in above item 22, wherein the thermal annealing is conducted after peeling the protective film from the substrate having the protrusion and the trench.
24. The process for manufacturing a fuel cell separator as described in any of above items 21 to 23, wherein a tensile fracture elongation of the protective film is 150 % or more in both longitudinal and transverse directions.
25. The process for manufacturing a fuel cell separator as described in any of above items 21 to 24, wherein the protective film has a thickness of 5 to 100 µm.

### Brief Description of the Drawings

FIG. 1 schematically shows an area around a separator for a fuel cell.
FIG. 2 shows an example of a layer structure of a separator according to this invention.
FIG. 3 shows an example of a layer structure of a separator according to this invention.
FIG. 4 shows a method for determining a sheet resistivity.
FIG. 5 is a graph showing relationship between an apparent load (pressure) and a sheet resistivity.

In these drawings, the symbols have the following meanings; 1a, 1b: electric cell (unit cell), 2a, 2b: polymer electrolyte membrane, 3a, 3b: electrode, 4a, 4b: gas channel, 10: separator, 11: metal substrate, 12: resin conductive layer, 13: first resin layer, 14: second resin layer, 15: third resin layer, 21: brass electrode, 22: carbon paper, 23: separator.

### Best Mode for Carrying the Invention

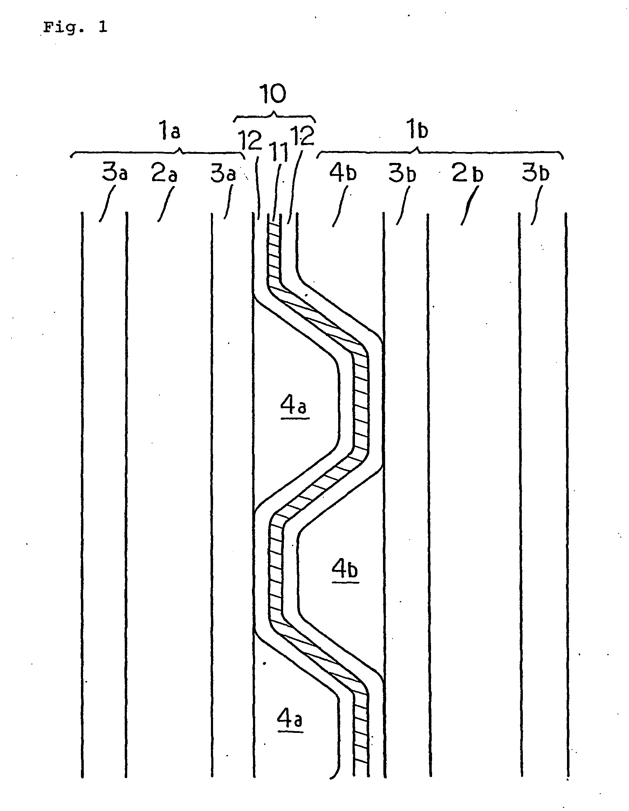

FIG. 1 is a schematic enlarged view of an area around a separator in a laminate type fuel cell in which a number of electric cells are stacked. Electric cells 1a and 1b have polymer electrolyte membrane 2a, 2b and electrodes 3a, 3b sandwiching the polymer electrolyte membrane, respectively. Furthermore, the electric cells 1a and 1b are separated by a separator 10, which at the same time, is in contact with the electrode 3a to form a gas channel 4a in the side of the electric cell 1a while being in contact with the electrode 3b to form a gas channel 4b in the side of the electric cell 1b. This type of separator 10 has a configuration that resin conductive layers (i.e. resin-composition electro-conductive layer) 12 are formed on both sides of a metal substrate 11 and are in contact with both electrodes 3a and 3b, to connect the electric cell 1a with the electric cell 1b in series.

Although resin conductive layers are disposed in both sides of a metal substrate in this example, a resin conductive layer may also be disposed only in one side of a metal substrate when a separator is used in a terminal electric cell. The following drawings, therefore, show a layer structure only in one side of the metal substrate.

A resin conductive layer of this invention has, as described above, (a) a first resin layer having a volume resistance of 1.0 Ω·cm or less, and (b) at least one of a second resin layer constituting the surface of the resin conductive layer and having a volume resistance smaller than that of the first resin layer and a third resin layer formed in an interface with the metal substrate and having a volume resistance smaller than that of the first resin layer.

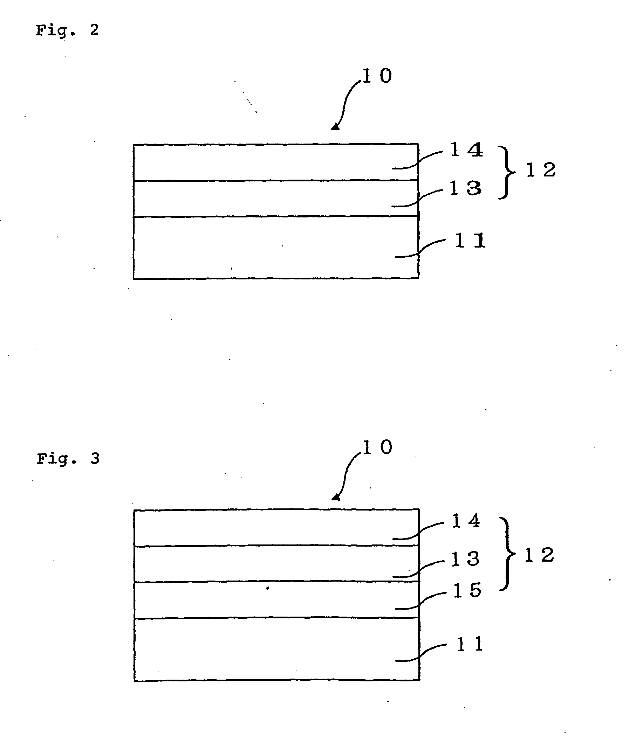

FIG. 2 shows an example of a layer structure of a separator. In this configuration, a resin conductive layer 12 on the surface of a metal substrate 11 consists of two layers, a first resin layer 13 and a second resin layer 14. The second resin layer as the surface layer of the resin conductive layer has a smaller volume resistance than the first resin layer. In this invention, the second resin layer as the surface layer has excellent conductivity, so that as shown in FIG. 1, a resistance in a contact surface with electrodes 3a, 3b can be reduced. On the other hand, since the first resin layer in the metal substrate side has a volume resistance of 1.0 Ω·cm or less, it does not have to have so high conductivity as in the second resin layer although it keeps adequate conductivity. Hence, with respect to the first resin layer, the layer structure can be formed while giving a high priority to formability, shaping property, strength and corrosion resistance by, for example, increasing a resin content. Specifically, in the present invention, the requirements for both current collecting performance and in pressing, formability, strength and corrosion resistance can be met by varying a volume resistance between the first resin and the second resin, where the required functions of the resin conductive layer are shared by and allocated to the first and the second resin layers.

FIG. 3 shows an example of a layer structure of a separator of different type. This example has a structure where a third resin layer 15 is further disposed between the first resin layer 13 and the metal substrate 11. The third resin layer has a smaller volume resistance than the first resin layer, so that it can reduce a contact resistance between the metal substrate and the resin conductive layer. Specifically, in this aspect, third resin layer reduces a contact resistance in the interface between the metal substrate and the resin conductive layer and the second resin layer reduce a contact resistance with an electrode, while at the same time, the first resin layer is formed so as to have a layer structure exhibiting good formability, shaping property, strength and corrosion resistance as a priority. Thus, there is obtained a separator that meets the requirements for both current collecting performance and formability, strength and corrosion resistance.

A volume resistance of the third resin layer may or may not be equal to a volume resistance of the second resin layer.

Another type of separator may be a structure where in addition to the first resin layer, a third resin layer 15 is disposed between the layer and the metal substrate, that is, a configuration as shown in FIG. 3 without the second resin layer. In this configuration, the third resin layer can reduce a contact resistance in an interface between the metal substrate and the resin conductive layer.

Among these three configurations described above, the structure having, in addition to the first resin layer, both second and third resin layers is the most preferable in the light of reduction in a contact resistance.

This invention will be more specifically described, referring to materials for individual layers.

A metal substrate suitably used in a separator of this invention may be a thin plate made of stainless steel, titanium, aluminum, copper, nickel or steel. Its thickness is desirably 0.03 mm to 1.5 mm, particularly 0.1 to 0.3 mm.

A metal substrate surface may be used as such, or may be subjected to surface treatment or provided with a surface layer for various purposes. For example, in order to improve adhesiveness to a resin conductive layer, a metal substrate surface can be treated with a primer such as a silane coupling agent.

However, when intervention by a primer layer and/or an adhesive layer causes increase in a contact resistance between a metal substrate and a resin conductive layer, it is also preferable to directly bond a metal substrate with a resin conductive layer without such an intervening layer. Furthermore, roughening a metal substrate surface is also preferable because adhesiveness between the metal substrate and the resin conductive layer is improved. Such roughening is particularly preferable when the metal substrate directly adheres to the resin conductive layer. Roughening is conducted to such a level that an average roughness of a central line Ra is 0.05 to 5.0 µm, preferably 0.1 to 1.0 µm. If roughness is inadequate, adhesion to the resin conductive layer is insufficient while forming a fine rough surface having a large irregularity takes much time, leading to lower productivity. A surface can be roughened by etching, which can be preferably selected, depending on the type of a metal substrate, from appropriate processes such as mechanical etching using an abrasive, chemical etching using a chemical agent and electrolytic etching utilizing anodic dissolution using electric energy.

In this invention, it is also preferable to form a plated layer on the surface of a metal substrate. Since depending on the type of a metal a contact resistance may be increased due to formation of an oxide film on the surface, a plated layer of a metal resistant to oxide-film formation can be formed on the substrate surface to reduced a contact resistance between the metal substrate and the resin conductive layer. Preferable examples of a plated layer metal include nickel, tin, copper, titanium, gold, platinum , silver and palladium. Particularly preferable examples include nickel, tin, copper and titanium. Examples of a metal substrate material on which such a plated layer is preferably formed include stainless steel, aluminum and steel.

A resin contained in the resin conductive layer is preferably selected from a fluororesin, fluororubber, polyolefin resin or polyolefin elastomer in the light of chemical resistance. Specific examples of a fluororesin and a fluororubber include PTFE (polytetrafluoroethylene), PFA (tetrafluoroethylene-perfluoroalkyl vinyl ether copolymer), FEP (tetrafluoroethylene-hexafluoropropylene copolymer), EPE (tetrafluoroethylene-hexafluoropropylene-perfluoroalkyl vinyl ether copolymer), ETFE (tetrafluoroethylene-ethylene copolymer), PCTFE (polychlorotrifluoroethylene), ECTFE (chlorotrifluoroethylene-ethylene copolymer), PVDF (polyvinylidene fluoride), PVF (polyvinyl fluoride), THV (tetrafluoroethylene-hexafluoropropylene-vinylidene fluoride copolymer), VDF-HFP (vinylidene fluoride-hexafluoropropylene copolymer), TFE-P (vinylidene fluoride-propylene copolymer), fluorine-containing silicone rubbers, fluorine-containing vinyl ether rubbers, fluorine-containing phosphazene rubbers and fluorine-containing thermoelastic elastomers. These fluororesins or fluororubbers may be used alone or in combination of two or more.

In the light of formability, particularly preferred are PVDF, THV, VDF-HFP and TFE-P which contain vinylidene fluoride.

Specific examples of a polyolefin resin and a polyolefin elastomer include polyethylene, polypropylene, polybutene, poly4-methyl-1-pentene, polyhexene, polyoctene, hydrogenated styrene-butadiene rubbers, EPDM, EPM and EBM, which can be used alone or in combination of two or more.

Among these resins, particularly preferred are polyethylene, polypropylene and EPDM in the light of heat resistance and formability.

A conductive filler can be preferably selected from materials having a higher conductivity and exhibiting good corrosion resistance, including powdery or fibrous conductive materials such as carbon materials, metal carbides, metal oxides, metal nitrides and metals, depending on the use environment.

Examples of a powdery carbon material include graphite (artificial graphite and natural graphite), carbon black and exfoliated graphite, and examples of a fibrous carbon materials include fine carbon fiber and carbon fiber. Preferably, a fine carbon fiber has a fiber diameter of 0.001 to 0.5 µm, preferably 0.003 to 0.2 µm and a fiber length of 1 to 100 µm, preferably 1 to 30 µm in the light of conductivity. Fine carbon fibers include so-called carbon nanotubes and carbon nanofibers. Carbon nanotubes include single types in which a carbon tube structure is a single wall tube, double types in which the tube structure is a double wall tube, and multi types in which the tube structure is a triple or more wall tube, and further include nanohorn types in which one end of a tube is closed while the other end is open and cup types in which one end has a larger opening than the other end.

Examples of a metal carbide include powdery tungsten carbide, silicon carbide, tantalum carbide, titanium carbide, niobium carbide, molybdenum carbide, vanadium carbide, chromium carbide and hafnium carbide. Among these, particularly preferred are powdery or fibrous tungsten carbide, titanium carbide, niobium carbide and chromium carbide.

Examples of a metal oxide include powdery titanium oxide, ruthenium oxide, indium oxide, tin oxide and zinc oxide. Among these, preferred are powdery or fibrous tin oxide and indium oxide.

Examples of a metal nitride include powdery or fibrous chromium nitride, aluminum nitride, molybdenum nitride, zirconium nitride, tantalum nitride, titanium nitride, gallium nitride, niobium nitride, vanadium nitride and boron nitride. Among these, preferred are chromium nitride and molybdenum nitride.

Examples of a powdery metal include powdery titanium, nickel, tin, copper, aluminum, zinc, silver, tantalum and niobium, and examples of a fibrous metal include iron fiber, copper fiber and stainless-steel fiber.

Conductive fillers may be used alone or in combination of two or more. For example, a carbon nanotube and/or a carbon nanofiber can be combined with another carbon material.

Among these conductive fillers, preferred are those having a higher conductivity, stable even when being exposed to substantially saturated steam at a temperature of 70 to 90 °C and exhibiting less variation in a resistance; particularly, a carbon material is preferable. Specifically, either carbon black or a fine carbon fiber or a mixture of them is preferable.

A powdery conductive filler has a weight average particle size (as determined by laser scattering) of generally 20µm or less, preferably 15 µm or less, particularly preferably 10 µm or less, and generally 0.01 µm or more, preferably 0.03 µm or more. In terms of fibrous materials, a fine carbon fiber is as described above; and for fibers of other materials, a fiber diameter is 50 µm or less, preferably 20 µm or less and generally 1 µm or more, preferably 5 µm or more, and a fiber length is 1 to 10,000 µm, preferably 5 to 1,000 µm in the light of conductivity.

A resin conductive layer of this invention is a mixture of resin and conductive filler as described above. Here, they may be appropriately formulated such that a volume resistance of the first resin layer in contact with the metal substrate surface is 1.0 Ω·cm or less as determined in accordance with JIS K 7194. In terms of a volume resistance in the second and the third resin layers, the components may be appropriately formulated such that these layers have a smaller volume resistivity than the first resin layer. A volume resistance in the second and the third resin layers is preferably 0.5 Ω·cm or less, particularly 0.3 Ω·cm or less. It is not practically feasible to extremely reduce a volume resistance in the first to the third resin layers; it is generally 0.0001 Ω·cm or more, for example 0.001 Ω·cm or more, typically about 0.01 Ω·cm or more.

In one aspect of the present invention, the second and the third resin layers (for each layer, if present) are configured such that a volume content of a conductive filler in each layer is larger than that in the first resin layer. Specifically, it is preferable that a content of a conductive filler in the first resin layer is 5 to 40 % by volume ("% by volume" is a volume proportion of a filler to the total volume of the resin layer. Hereinafter, this definition is used.) while a content of a conductive filler in the second and the third resin layers are selected within the range of 20 to 90 % by volume such that the second and the third resin layers have a larger volume content of a conductive filler than the first resin layer. More preferably, a content in the first resin layer is 8 to 15% by volume while a content in the second and the third resins is 20 to 90 % by volume. Preferably, these contents are optimized, taking, for example, the type of a conductive filler such that a volume resistance is at least 1.0 Ω·cm or less as well as moldability into account.

When forming both second and third resin layers, the type and the amount of a conductive filler can be appropriately adjusted, and they may or may not be identical between the second and the third resin layers.

In a preferable embodiment, a conductive filler contained in the first resin layer is carbon black and a conductive filler contained in the second and the third resin layers (for each layer, if present) is a fine carbon fiber. Therefore, in a particularly preferable embodiment, both second and third resin layers are present and contain a fine carbon fiber as a conductive filler, and the first resin layer contains carbon black as a conductive filler.

In terms of a thickness of each resin layer, first, the first resin layer has a thickness of generally 5 to 300 µm, preferably 10 to 150 µm, more preferably 10 to 100 µm, The second and the third resin layers have a thickness of generally 0.1 to 20 µm, preferably 1 to 10 µm,

If the total thickness of the resin conductive layer is too small, anti-corrosive effect for a metal substrate is inadequate, and if it is too large, a separator becomes thick and a stacked fuel cell becomes large. It is, therefore, preferably determined within the general ranges for the individual layers described above in the light of factors such as conductivity, formability and strength. Thus, it is generally 5.1 to 340 µm, preferably 11 to 170 µm, more preferably 15 to 150 µm.

A separator of this invention can be manufactured, for example, by, but not limited to, preliminarily forming a first, a second and a third resin layers as sheets by a common procedure such as extrusion molding or roll forming; sequentially laminating the third resin layer (if present), the first resin layer and the second resin layer on one side or both sides of a metal substrate; and hot-pressing them into an integral part. The hot pressing can be conducted under the common pressing conditions; heating temperature: 120 °C to 300 °C and pressure: about 2.9×10⁶ Pa to 9.8×10⁶ Pa (30 kgf/cm² to 100 kgf/cm²).

Particularly for the second and the third resin layers, the content of a conductive filler may be too much to make forming a self-suporting sheet difficult. If so, on an appropriate transfer substrate is preliminarily formed a film, which can be then thermally transferred to form the lamination. A film can be formed on a transfer substrate by, for example, applying a dispersion of a resin and a conductive filler in an appropriate solvent onto a transfer substrate and then drying it.

In a fuel cell, it is essential to form gas channels for, for instance, a fuel gas and oxygen gas between a separator and an electrode and, hence, to form a number of protrusions and trenches which are to be gas channels in the separator surface. In the light of, for example, productivity, it is preferable that the protrusions and the trenches are preferably formed by (1) forming a laminate prepared by applying a resin conductive layer on a metal substrate and then (2) forming protrusions and trenches by pressing to provide a separator having a given shape.

Here, depending on the conditions during pressing, clefts and/or cracks may be formed in a resin layer. Thus, for preventing these, it is also preferable to use a protective film to cover the surface of the resin conductive layer before pressing.

This protective film has a tensile strain at break (as determined in accordance with JIS K7127) of 150 % or more in both longitudinal and transverse directions. If a tensile fracture elongation is less than 150 %, the film cannot be adequately elongated as a protective film, so that when forming deeper gas channels by pressing, clefts and/or cracks tend to be formed in a resin layer containing a conductive filler.

A thickness of the protective film is suitably within the range of 5 to 100 µm. If the thickness is less than 5 µm, the film is too thin to be easily handled and too weak to be broken during pressing, by which the film cannot substantially act as a protective film. If the thickness is more than 100 µm, the protective film tends to be too thick to form a number of protrusions and trenches for forming gas channels with a narrower interval or to form deeper gas channels.

Examples of a material for a protective film include thermoplastic resins, rubbers and thermoplastic elastomers. Specifically, a thermoplastic resin may be at least one thermoplastic resin selected from polyolefins, polyvinyl acetate, polyvinyl chloride, polyvinylidene chloride, polyurethanes, fluororesins, polyamides, polyesters and polyamide imides.

A rubber may be at least one rubber selected from natural rubbers, isoprene rubbers, styrene-butadiene rubbers, butadiene rubbers, ethylene-propylene rubbers, ethylene-propylene-diene rubbers, butadiene rubbers, chloroprene rubbers, nitrile rubbers, acrylic rubbers, epichlorohydrin rubbers, chlorinated polyethylene, chlorosulfonylated rubbers, silicone rubbers, fluorosilicone rubbers, fluororubbers, polysulfides and urethane rubbers.

A thermoplastic elastomer may be at least one thermoplastic elastomer selected from styrene-, olefin-, vinyl chloride-, urethane-, polyester-, polyamide-, fluoro-, conjugated butadiene- and silicone-based elastomers. Among these, polyolefins, ethylene-vinyl acetate copolymers, ethylene-containing rubbers and thermoplastic elastomers which are relatively inexpensive and have a large breaking elongation ratio can be suitably used.

There are no particular restrictions to a method for coating with a protective film; for example, heat bonding method and method of application of an adhesive. The above protective film must be peeled off after forming a number of protrusions and/or trenches for forming gas channels by pressing. Thus, adhesive strength of a protective film to a metal substrate coated with a conductive resin layer may be appropriately determined by adjusting a temperature in heat bonding method or a pressure during adhesion in an adhesive method, such that adhesive strength suitable for peeling can be obtained.

It is also preferable to perform annealing after pressing. Annealing eliminates fine cracks or distortions in a resin conductive layer, and is conducted by heating to an extent or more that the resin contained in the resin conductive layer becomes soft. Preferably, annealing may be conducted after pressing without a protective film; or may be after pressing using a protective film and peeling the protective film, for example. It is the most preferable to carry out both steps of pressing using a protective film and annealing. Thus, defects can be minimized and increase in a resistance or elution of a metal component from a metal substrate can be prevented even after a long-term use.

An annealing temperature may vary depending on the type of a resin used, but the heating is preferably conducted at a temperature higher than a melting point or softening point of the resin.

When the resin in the resin conductive layer is a fluororesin or fluororubber, annealing is preferably conducted at a temperature within the range of 150 to 300 °C for 1 to 20 min. In particular, when using PVDF or THV as a fluororesin, the process is preferably conducted at 150 to 200 °C-for 5 to 10 min. When using a polyolefin resin and a polyolefin elastomer, it is preferably conducted at 110 to 200 °C for 1 to 20 min. In particular, when using a propylene-containing polyolefin elastomer, the process is preferably conducted at 180 to 200 °C for 5 to 10 min.

### EXAMPLES

There will be described this invention with reference to non-limiting examples.

### <Determination of a volume resistance>

A volume resistance of a conductive film was determined as described below in accordance with JIS K 7194.

### 1. Measuring apparatus

Loresta HP (Mitsubishi Chemical Corporation)

### 2. Measuring method

Four-terminal four-probe method (ASP type probe)

### 3. Applied current

100 mA

### <Determination of a sheet resistivity>

A sheet resistivity was evaluated as described below.

### 1. Measuring apparatus

Resistance meter: Type YMR-3 (Yamasaki-seiki Co, Ltd.)
Loading device: Type YSR-8 (Yamasaki-seiki Co., Ltd.)
Electrodes: Two brass plates (Area: 1 square inch, mirror finished).

### 2. Measurement conditions

Method: Four terminal method
Applied current: 10 mA (alternating current, 287 Hz)
Open-terminal voltage: 20 mV peak or less
Apparent load (pressure)
0.90×10⁵ Pa
1.8×10⁵ Pa
4.5×10⁵ Pa
9.0×10⁵ Pa
18×10⁵ Pa
Carbon paper: TGP-H-090 (Toray Industries, Inc.; thickness: 0.28 mm) 3. Measuring method

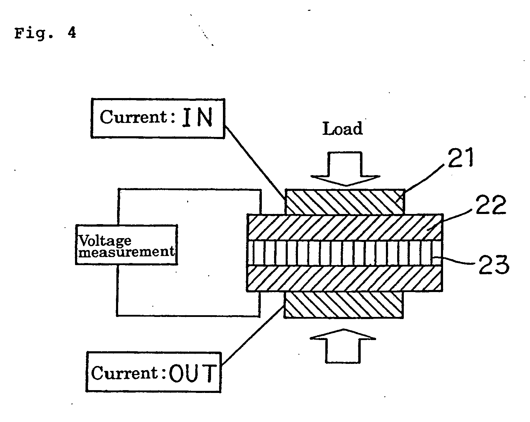

Using the measuring apparatus shown in FIG. 4, a separator 23 was sandwiched by brass electrodes 21 via a carbon paper 22 from both sides. While applying a given current under a given load, a voltage was measured by a four-terminal method to determine a contact resistance.

### <Example 1>

First, 88 % by volume of a fluororesin (Sumitomo 3M Ltd., THV415G, specific gravity: 2) and 12% by volume of carbon black (Lion Corporation, Ketjen Black EC600JD, specific gravity: 1.5) as a conductant agent were mixed by a twin screw extruder.

The mixture was extruded (at an extrusion temperature of 240 °C) into a conductive fluororesin sheet with a thickness of 50 µm. The conductive fluororesin had a volume resistance of 0.8 Ω·cm.

A metal substrate was a metal plate prepared by forming a nickel plated layer on a SUS304 plate (thickness: 0.3 mm) to 0.8 µm. On both sides of the SUS 304 plate having the plated layer was applied a 0.3 % solution of a silane coupling agent (GE Toshiba Silicones, TSL8331) in ethanol as a primer by a #10 bar coater, and then the substrate was dried at 100 °C for 10 min. The conductive fluororesin sheet, the SUS304 and the conductive fluororesin sheet are placed in this order, and they were heat-pressed into an integral laminate. Thus, first resin layers were formed on both sides of the metal substrate.

The hot pressing was conducted at a temperature of 200 °C and a pressure of 3.5×10⁶ Pa (36 kgf/cm²) for 10 min.

Separately, as preparation for forming a second resin layer, to MEK (methyl ethyl ketone) were added a fluororesin (Sumitomo 3M Ltd., THV220G, specific gravity: 2) and a fine carbon fiber (Showa Denko K.K., a vapor grown carbon fiber (VGCF), specific gravity: 2) to 10 % by weight as a solid in a volume ratio of 30/70, to prepare a coating material.

The coating material was applied on a substrate film (polyethylene terephthalate, Mitsubishi Polyester Film Corporation, thickness: 25 µm) by a bar coater (Matsuo Sangyo Co. Ltd., #24). The solvent was evaporated at 80 °C to provide a transfer sheet having a transfer layer with a thickness of 10 µm. Using two transfer sheets thus prepared, their resin sides were placed over the first resin layers in both sides of the metal substrate, and they were hot-pressed at a temperature of 200 °C and a pressure of 3.5×10⁶ Pa (36 kgf/cm²) for 10 min, and then the transfer substrate was removed to provide a second resin layer. Separately, a volume resistance of the second resin layer was determined and was 0.35 Ω·cm.

Composite plate 1 thus prepared had a total thickness of 0.42 mm.

### <Example 2>

Using a fluororesin sheet (the first resin layer, thickness: 50 µm) and two transfer sheets (a transfer-layer thickness of 10 µm) prepared as described Example 1, the transfer sheet, the fluororesin sheet and the transfer sheet were sequentially placed in this order such that the outermost layer is the transfer substrate (PET sheet). After hot-pressing at a temperature of 200 °C and a pressure of 3.5×10⁶ Pa (36 kgf/cm²) for 10 min, the two transfer substrates were removed to form a second and a third resin layers in both sides of the first resin layer. The sheet thus prepared had a total thickness of 170 µm.

Using two conductive sheets prepared as described above and, as a metal plate, a SUS304 plate (thickness: 0.3 mm) having a surface nickel-plated layer with a thickness of 0.8 µm as described in Example 1, the conductive sheet, the SUS304 plate and the conductive sheet were sequentially placed in this order, and they were hot-pressed at a temperature of 200 °C and a pressure of 3.5×10⁶ Pa (36 kgf/cm²) for 10 min into an integral laminate, to form the second resin layer/the first resin layer/the third resin layer in sequence from the outer side on both sides of the metal substrate.

Composite plate 2 thus prepared had a thickness of 0.44 mm.

### <Example 3>

First, 85 % by volume of a polyolefin elastomer (Idemitsu Kosan Co., Ltd., T310E, specific gravity: 0.88) and 15% by volume of carbon black (Lion Corporation, Ketjen Black EC600JD, specific gravity: 1.5) as a conductant agent were mixed by a twin screw extruder.

The mixture was extruded (at an extrusion temperature of 260 °C) into a conductive polyolefin resin sheet with a thickness of 50 µm. The conductive polyolefin resin had a volume resistance of 0.5 Ω·cm.

Separately, as preparation for forming a second resin layer, to cyclohexane were added a styrene elastomer (Asahi Kasei Corporation, Tuftec H1041, specific gravity: 0.91) and a fine carbon fiber (Showa Denko K.K., a vapor grown carbon fiber (VGCF), specific gravity: 2) to 10 % by weight as a solid in a volume ratio of 30/70, to prepare a coating material.

The coating material was applied on a substrate film (polyethylene terephthalate, Mitsubishi Polyester Film Corporation, thickness: 25 µm) by a bar coater (Matsuo Sangyo Co. Ltd., #24). The solvent was evaporated at 80 °C to provide a transfer sheet having a transfer layer with a thickness of 10 µm.

Using the polyolefin resin sheet (the first resin layer, thickness: 50 µm) and two styrene-elastomer transfer sheets (a transfer-layer thickness of 10 µm), the transfer sheet, the polyolefin resin sheet and the transfer sheet were sequentially placed in this order such that the outermost layer is the transfer substrate (PET sheet). After hot-pressing at a temperature of 200 °C and a pressure of 3.5×10⁶ Pa (36 kgf/cm²) for 10 min, the two transfer substrates were removed to form a second and a third resin layers in both sides of the first resin layer. The sheet thus prepared had a total thickness of 70 µm.

Using two conductive sheets prepared as described above and, as a metal plate, a SUS304 plate (thickness: 0.3 mm) having a surface nickel-plated layer with a thickness of 0.8 µm as described in Example 2, the conductive sheet, the SUS304 plate and the conductive sheet were sequentially placed in this order, and they were hot-pressed at a temperature of 200 °C and a pressure of 3.5×10⁶ Pa (36 kgf/cm²) for 10 min into an integral laminate, to form the second resin layer/the first resin layer/the third resin layer in sequence from the outer side on both sides of the metal substrate.

Composite plate 3 thus prepared had a thickness of 0.44 mm.

### <Example 4>

Composite plate 4 was prepared as described in Example 2, except that a metal plate used was manufactured by roughening the surface of SUS304 (average roughness of a central line Ra = 0.3 µm) by a jet scrub polisher using an alumina abrasive (Sacrandom R#150, Japan Carlit Co. Ltd.) and then forming a nickel plated layer on the surface to 0.8 µm.

### <Measurement of a sheet resistivity for Examples 1 to 4>

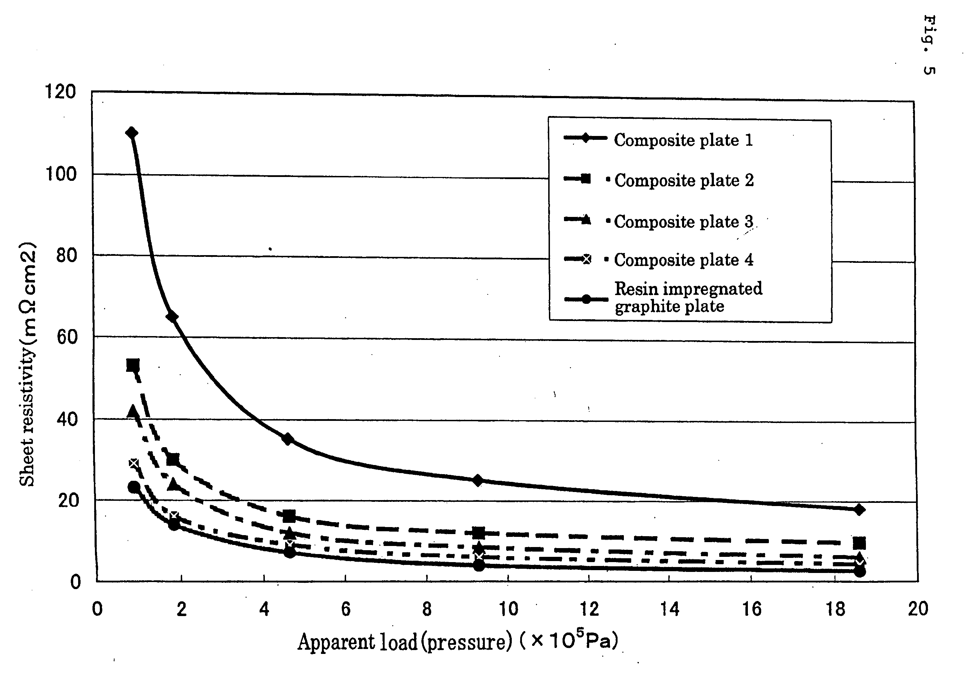

The measurement results of a sheet resistivity for Composite plates 1 to 4 prepared in Examples 1 to 4 are shown in the graph of FIG. 5. For comparison, a resin impregnated graphite G347B (Tokai Carbon Co. Ltd.) was also evaluated.

As seen in the graph of FIG. 5, Composite plates 2 to 4 having the first, the second and the third resin layers have a significantly smaller sheet resistivity, which is substantially comparable to that in the resin impregnated graphite.

### <Example 5>

On one side surface of Composite plate 4 prepared in Example 4 was placed a protective film (Sekisui Chemical Co., Ltd., polyethylene film #6312B, thickness: 50 µm), which was then attached by a hand roller. Next, a protective film was attached on the other side surface, to prepare Composite plate 41.

For the protective film used, a tensile fracture elongation was measured in accordance with JIS K7127, and was 550 % in a film deposition direction (MD direction) and 600 % in a perpendicular direction (TD direction).

### <Results of Pressing>

Composite plate 4 without a protective film and Composite plate 41 prepared as described above were subjected to a molding test by a press molding machine (Amada Co. Ltd., "Torque pack press", press speed: 45 spm) at room temperature, using a mold by which gas channels after pressing were formed in a wave shape, a gas channel pitch was 3 mm and a vertical distance between the top and the bottom of the wave was 0.5 mm. After the pressing, the wave bottoms in Composite plate 4 as such and Composite plate 41 after removal of the protective film were observed by a microscope (Keyence Corporation, "Digital HD Microscope VH-7000"). Consequently, clefts and/or cracks were sometimes observed in the resin conductive layer in Composite plate 4 without a protective film, while no cracks were observed in Composite plate 41 with a protective film.

### Industrial Applicability

As described above, the present invention can provide a fuel cell separator meeting the requirements for both current collecting performance and formability, strength and corrosion resistance, particularly a separator for a solid polymer electrolyte type fuel cell, which is, therefore, very useful for a fuel cell capable of long-term operation.

## Claims

1. A fuel cell separator comprising a resin conductive layer as a mixture of a resin and a conductive filler at least on one side of a metal substrate, wherein
the resin conductive layer comprises
(a) a first resin layer having a volume resistance of 1.0 Ω·cm or less, and
(b) at least one of a second resin layer constituting the surface of the resin conductive layer and having a volume resistance smaller than that of the first resin layer and a third resin layer formed in an interface with the metal substrate and having a volume resistance smaller than that of the first resin layer.

2. The fuel cell separator as claimed in Claim 1, wherein each of the second resin layer and the third resin layer has a larger volume content of the conductive filler in the respective resin layer than that of the conductive filler in the first resin layer.

3. The fuel cell separator as claimed in Claim 1 or 2, wherein each of the second resin layer and the third resin layer has a volume resistance of 0.5 Ω·cm or less.

4. The fuel cell separator as claimed in any of Claims 1 to 3, wherein the first resin layer contains the conductive filler in 5 to 40 % by volume and each of the second and the third resin layers contains the conductive filler in 20 to 90 % by volume.

5. The fuel cell separator as claimed in Claim 4, wherein the first resin layer contains the conductive filler in 8 to 15 % by volume.

6. The fuel cell separator as claimed in any of Claims 1 to 5, wherein the metal substrate is made of a material selected from the group consisting of stainless steel, titanium, aluminum, copper, nickel and steel.

7. The fuel cell separator as claimed in Claim 6, wherein the metal substrate has, in its surface, a plated layer made of at least one metal selected from the group consisting of nickel, tin, copper, titanium, gold, platinum, silver and palladium.

8. The fuel cell separator as claimed in Claim 6, wherein the metal substrate has a roughened surface.

9. The fuel cell separator as claimed in any of Claims 1 to 8, wherein the conductive filler is selected from the group consisting of carbon materials, metal carbides, metal oxides, metal nitrides and metals.

10. The fuel cell separator as claimed in Claim 9, wherein the conductive filler is selected from the group consisting of carbon black and a fine carbon fiber.

11. The fuel cell separator as claimed in any of Claims 1 to 8, wherein the conductive filler contained in each of the second resin layer and the third resin layer comprises the fine carbon fiber.

12. The fuel cell separator as claimed in Claim 11, wherein the fine carbon fiber has a fiber diameter of 0.001 to 0.5 µm and a fiber length of 1 to 100 µm.

13. The fuel cell separator as claimed in Claim 9, wherein the conductive filler contained in the first resin layer comprises carbon black.

14. The fuel cell separator as claimed in any of Claims 1 to 13, wherein the resin is selected from the group consisting of fluororesins, fluororubbers, polyolefin resins and polyolefin elastomers.

15. The fuel cell separator as claimed in any of Claims 1 to 14, wherein the first resin layer has a thickness of 5 to 300 µm, and each of the second and the third resin layers has a thickness of 0.1 to 20 µm.

16. The fuel cell separator as claimed in any of Claims 1 to 15, wherein the resin conductive layer has the first and the second resin layers.

17. The fuel cell separator as claimed in any of Claims 1 to 15, wherein the resin conductive layer has the first and the third resin layers.

18. The fuel cell separator as claimed in any of Claims 1 to 15, wherein the resin conductive layer has the first, the second and the third resin layers.

19. A process for manufacturing the fuel cell separator as claimed in any of Claims 1 to 18, comprising steps of:
laminating a resin conductive layer as a mixture of a resin and a conductive filler on at least one side of a metal substrate; and
forming a protrusion and a trench to be a gas channel, by pressing the substrate having the laminated resin conductive layer.

20. The process for manufacturing a fuel cell separator as claimed in Claim 19, further comprising a step of thermal annealing after the forming the protrusion and the trench by pressing.

21. A process for manufacturing a fuel cell separator as described in any of Claims 1 to 18, comprising steps of:
laminating a resin conductive layer as a mixture of a resin and a conductive filler on at least one side of a metal substrate;
covering the uppermost surface of the metal substrate having the laminated resin conductive layer with a protective film;
forming a protrusion and a trench to be a gas channel by pressing the substrate covered by the protective film; and
peeling the protective film from the substrate having the protrusion and the trench.

22. The process for manufacturing a fuel cell separator as claimed in Claim 21, further comprising a step of thermal annealing after forming the protrusion and the trench by pressing.

23. The process for manufacturing a fuel cell separator as claimed in Claim 22, wherein the thermal annealing is conducted after peeling the protective film from the substrate having the protrusion and the trench.

24. The process for manufacturing a fuel cell separator as claimed in any of Claims 21 to 23, wherein a tensile fracture elongation of the protective film is 150 % or more in both longitudinal and transverse directions.

25. The process for manufacturing a fuel cell separator as claimed in any of Claims 21 to 24, wherein the protective film has a thickness of 5 to 100 µm.
